(19) Europäisches Patentamt / European Patent Office / Office européen des brevets

(11) **EP 4 383 877 A1**

(12) **EUROPEAN PATENT APPLICATION**
published in accordance with Art. 153(4) EPC

(43) Date of publication:
**12.06.2024 Bulletin 2024/24**

(21) Application number: **21952354.5**

(22) Date of filing: **05.08.2021**

(51) International Patent Classification (IPC):
**H04W 72/04** $^{(2023.01)}$

(52) Cooperative Patent Classification (CPC):
**H04W 72/04**

(86) International application number:
**PCT/CN2021/111033**

(87) International publication number:
**WO 2023/010469 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• **CHEN, Zhe**
  **Beijing 100022 (CN)**
• **ZHANG, Lei**
  **Beijing 100022 (CN)**
• **WANG, Xin**
  **Beijing 100022 (CN)**

(74) Representative: **Haseltine Lake Kempner LLP**
**Cheapside House**
**138 Cheapside**
**London EC2V 6BJ (GB)**

(54) **SIGNAL TRANSMISSION METHOD AND APPARATUS, AND SYSTEM**

(57) Embodiments of this disclosure provide a signal transmission method and apparatus, and a system. The method includes: receiving first indication information and second indication information by a terminal equipment, the first indication information indicating the terminal equipment to transmit a first uplink signal, and the second indication information indicating the terminal equipment to transmit a second uplink signal; and determining an uplink power control parameter of the second uplink signal by the terminal equipment according to a transmit power control command received between a first time point and a second time point; wherein the first uplink signal corresponds to a first uplink signal transmission occasion, and the second uplink signal corresponds to a second uplink signal transmission occasion; the first time point is prior to the first uplink signal transmission occasion, the second time point is prior to the second uplink signal transmission occasion; and a time interval between the first time point and/or the second time point and the corresponding uplink signal transmission occasion is determined according to one of two associated PDCCH candidates or is related to whether the terminal equipment monitors control information of two associated PDCCH candidates.

FIG. 1

the terminal equipment receives first indication information, the first indication information indicating the terminal equipment to transmit a first uplink signal, wherein the first uplink signal corresponds to a first uplink signal transmission occasion — 101

the terminal equipment receives second indication information, the second indication information indicating the terminal equipment to transmit a second uplink signal, wherein the second uplink signal corresponds to a second uplink signal transmission occasion — 102

the terminal equipment determines an uplink power control parameter of the second uplink signal according to a transmission power control (TPC) command received between a first time point and a second time point — 103

## Description

Field

This disclosure relates to the field of communications.

Background

In order to meet requirements of high reliable and low latency for ultra-reliable and low latency communication (URLLC) services, a new transmission mechanism for downlink control information is introduced into NR Rel-17 (New Radio Release 17) to improve reliability.
Currently, an NR (New Radio) system supports use of a multi-TRP (transmission and reception Point) PDCCH (physical downlink control channel) to schedule or trigger uplink or downlink signals.
It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

For a multi-TRP PDCCH, a feasible implementation is that the PDCCH is carried by two different time-frequency resources, i.e. the PDCCH corresponds to two PDCCH candidates. That is, a network device may transmit DCI from a TRP in a time-frequency resource where one of the two PDCCH candidates is located, and transmit the same DCI from another TRP in a time-frequency resource where the other one of the two PDCCH candidates is located. Hence, a terminal equipment may receive DCI even when one of the TRPs is obstructed, thereby improving robustness of downlink control channels.
However, in some cases, PDCCHs may be used to determine starting points or ending points in time domain of some behaviors of a terminal equipment. In the scenario of using multi-TRP PDCCHs, starting times and ending times of two PDCCH candidates to which one PDCCH corresponds may possibly be different, which may lead to that in some cases, if no further provisions are made, the terminal equipment and the network device have no unified understanding of the starting times or ending times with PDCCHs as references.
For example, when a TPC command is indicated in an accumulative manner, a value related to the TPC command in a power control parameter corresponding to an uplink channel or signal is determined by all TPC command indications within a time range, and a starting point and ending point of the time range are both related to the PDCCH. When PDCCH/DCI correspond(s) to two PDCCH candidates, the starting point and ending point of the time range are unclear. This may lead to incorrectly calculating corresponding uplink power parameters by the terminal equipment, or incorrectly indicating the corresponding uplink power parameters by the base station.
For another example, in calculating a power headroom report (PHR), if the PHR is transmitted via a PUSCH and the PUSCH is scheduled by DCI, according to indication information between triggering the PHR and the DCI, the PHR needs to determine whether a reported content of the PHR is based on actual transmission or a reference format. When the DCI corresponds to two PDCCH candidates, a time-domain ending point referenced by calculation of the PHR is unclear. This may result in that the terminal equipment incorrectly calculates a corresponding PHR.
In order to solve the above problems or other similar problems, embodiments of this disclosure provide a signal transmission method and apparatus, and a system.
According to an aspect of the embodiments of this disclosure, there is provided a signal transmission apparatus, configured in a terminal equipment, wherein the apparatus includes:

a first receiving unit configured to receive first indication information, the first indication information indicating the terminal equipment to transmit a first uplink signal, wherein the first uplink signal corresponds to a first uplink signal transmission occasion;
a second receiving unit configured to receive second indication information, the second indication information indicating the terminal equipment to transmit a second uplink signal, wherein the second uplink signal corresponds to a second uplink signal transmission occasion; and
a determining unit configured to determine an uplink power control parameter of the second uplink signal according to a transmit power control (TPC) command received between a first time point and a second time point;
wherein,
the first time point is prior to the first uplink signal transmission occasion;
the second time point is prior to the second uplink signal transmission occasion;
a time interval between the first time point and/or the second time point and the corresponding uplink signal transmission occasion satisfies at least one of the following conditions that:

if the first indication information and/or the second indication information is/are control information and the control information corresponds to two PDCCH candidates, the time interval is determined according to one of the two PDCCH candidates;
if the first indication information and/or the second indication information is/are configuration grant information, the time interval is related to whether the terminal equipment monitors control information corresponding to the two PDCCH candidates;

if the first uplink signal and/or the second uplink signal is/are not in response to received downlink control information (DCI), the time interval is related to whether the terminal equipment monitors control information corresponding to the two PDCCH candidates; and

if the first uplink signal and/or the second uplink signal is/are a semi-persistent or periodic sounding reference signal(s) (SRS(s)), the time interval is related to whether the terminal equipment monitors control information corresponding to the two PDCCH candidates.

According to another aspect of the embodiments of this disclosure, there is provided a signal transmission apparatus, configured in a terminal equipment, wherein the apparatus includes:

a receiving unit configured to receive control information, the control information corresponding to two PDCCH candidates, the two PDCCH candidates corresponding to two PDCCH monitoring occasions, and the control information indicating the terminal equipment to transmit a PUSCH, the PUSCH including PHRs; and

a determining unit configured to, according to third indication information received within a time interval from the PHRs being triggered to a first PDCCH monitoring occasion and the first PDCCH monitoring occasion is included in the time interval, determine whether a PHR for an active serving cell in the PHRs is based on actual transmission or a reference format;

the first PDCCH monitoring occasion referring to one of the two PDCCH monitoring occasions.

One of the advantages of the embodiments of this disclosure exists in that in a case where the terminal equipment is able to monitor multi-TRP PDCCHs, the terminal equipment and the network device may have unified understanding of the starting times and ending times with PDCCHs as references.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is schematic diagram of the signal transmission method of an embodiment of a first aspect of this disclosure;

FIGs. 2-7 are schematic diagrams of six examples of uplink signal transmission according to the embodiment of the first aspect of this disclosure;

FIGs. 8-10 are schematic diagrams of three examples of uplink signal transmission according to the embodiment of the first aspect of this disclosure;

FIG. 11 is a schematic diagram of the signal transmission method of an embodiment of a second aspect of this disclosure;

FIGs. 12 and 13 are schematic diagrams of two examples of uplink signal transmission according to the embodiment of the second aspect of this disclosure;

FIG. 14 is a schematic diagram of the signal transmission apparatus of an embodiment of a third aspect of this disclosure;

FIG. 15 is another schematic diagram of the signal transmission apparatus of the embodiment of the third aspect of this disclosure;

FIG. 16 is a schematic diagram of the communication system of an embodiment of this disclosure; and

FIG. 17 is a schematic diagram of the terminal equipment of an embodiment of this disclosure.

Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Various implementations of the embodiments of this disclosure shall be described below with reference to the accompanying drawings. These implementations are illustrative only, and are not intended to limit this disclosure.

Embodiment of the first aspect

In an exemplary scenario of the embodiment of this disclosure, a closed-loop power control parameter of an uplink signal may be indicated by a transmit power control (TPC) command in a PDCCH. There are two indication modes for the TPC command: one is absolute TPC command indication, and the other is TPC command via accumulation indication; wherein the TPC command via accumulation means that a corresponding uplink signal needs to take into account a cumulative value of all TPC commands in a time range. It should be noted that start and end of the time range are both related to a time-domain position of the PDCCH. Therefore, when the PDCCH corresponds to two PDCCH candidates and time-domain positions to which the two PDCCH candidates correspond are different, starting and ending positions of the time range are ambiguous. This may result in that the terminal equipment misinterprets a corresponding power control command, thereby leading to degradation of system performances. In order to solve this problem, the embodiment of this disclosure provides a corresponding method for how to determine start and end of a time range referenced by a corresponding TPC command via accumulation in calculating a TPC command via accumulation in a case where the terminal equipment has ability to monitor multi-TRP PDCCHs.

The embodiment of this disclosure provides a signal transmission method, which shall be described from a terminal equipment side.

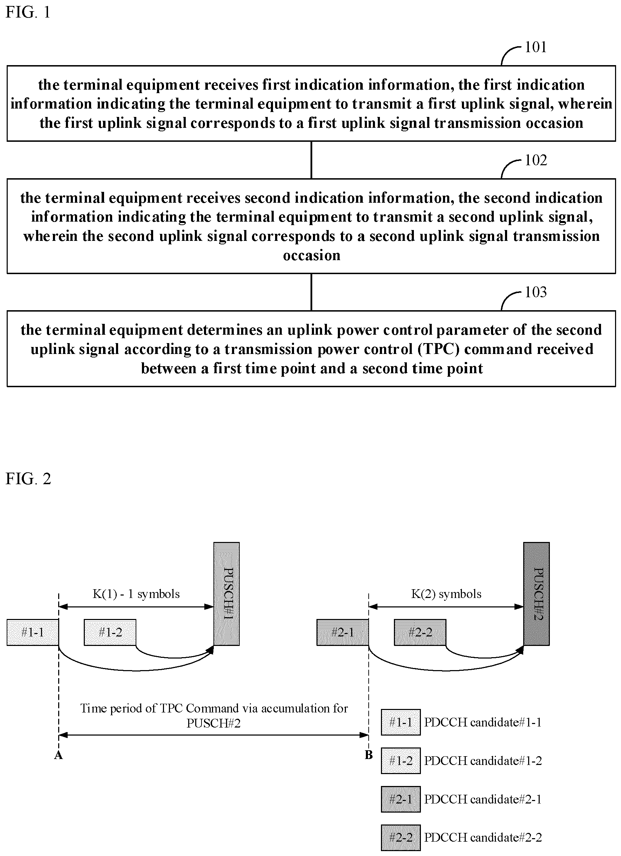

FIG. 1 is schematic diagram of the signal transmission method of the embodiment of this disclosure. Referring to FIG. 1, the method includes:

101: the terminal equipment receives first indication information, the first indication information indicating the terminal equipment to transmit a first uplink signal, wherein the first uplink signal corresponds to a first uplink signal transmission occasion;

102: the terminal equipment receives second indication information, the second indication information indicating the terminal equipment to transmit a second uplink signal, wherein the second uplink signal corresponds to a second uplink signal transmission occasion; and

103: the terminal equipment determines an uplink power control parameter of the second uplink signal according to a transmit power control (TPC) command received between a first time point and a second time point.

In the embodiment of this disclosure, the first time point is prior to the first uplink signal transmission occasion, the second time point is prior to the second uplink signal transmission occasion, and a time interval between the first time point and/or the second time point and the corresponding uplink signal transmission occasion satisfies at least one of the following conditions that:

if the first indication information and/or the second indication information is/are control information and the control information corresponds to two PDCCH candidates, the time interval is determined according to one of the two PDCCH candidates;

if the first indication information and/or the second indication information is/are configuration grant information, the time interval is related to whether the terminal equipment monitors control information corresponding to the two PDCCH candidates;

if the first uplink signal and/or the second uplink signal is/are not in response to received downlink control information (DCI), the time interval is related to whether the terminal equipment monitors control information corresponding to the two PDCCH candidates; and

if the first uplink signal and/or the second uplink signal is/are a semi-persistent or periodic sounding reference signal(s) (SRS(s)), the time interval is related to whether the terminal equipment monitors control information corresponding to the two PDCCH candidates.

According to the embodiment of this disclosure, in a case where the terminal equipment has ability to monitor multi-TRP PDCCHs, the terminal equipment and the network device may have unified understanding of the starting times and ending times with PDCCHs as references.

In the embodiment of this disclosure, the first time point is prior to the second time point. Hence, the terminal equipment is able to determine the uplink power control parameter of the second uplink signal according to the transmit power control command received between the first time point and the second time point.

In the embodiment of this disclosure, the first uplink signal transmission occasion is a latest uplink signal transmission occasion ensuring that the first time point is prior to the second time point before the second uplink signal transmission occasion. Therefore, the terminal equipment is able to determine the uplink power control parameter of the second uplink signal according to the transmit power control command received between the first time point and the second time point.

In the embodiment of this disclosure, if the first indication information and/or the second indication information is/are control information and the control information corresponds to two PDCCH candidates, the terminal equipment determines a time interval between the first time point and/or the second time point and the corresponding uplink signal transmission occasion according to one of the two PDCCH candidates, and further determines the uplink power control parameter of the second uplink signal according to the transmit power control (TPC) command received between the first time point and second time point.

For example, the terminal equipment determines the time interval according to an ending symbol of one of the two PDCCH candidates and a first symbol of the corresponding uplink signal transmission occasion.

The one of the two PDCCH candidates is, for example, a PDCCH candidate with an earlier starting symbol in the two PDCCH candidates, or a PDCCH candidate with an earlier ending symbol in the two PDCCH candidates, or a PDCCH candidate with a later starting symbol in the two PDCCH candidates, or a PDCCH candidate with a later ending symbol in the two PDCCH candidates.

In the above embodiment, the first uplink signal and the second uplink signal may be PUSCHs, or PUCCHs (physical uplink control channels), or SRSs (sounding reference signals), respectively, or any combinations thereof, and this disclosure is not limited there-

to.

FIG. 2 is a schematic diagram of a case where the first indication information and second indication information are control information and the first uplink signal and second uplink signal are PUSCHs.

As shown in FIG. 2, the terminal equipment receives PDCCH#1 (the first indication information) and PDCCH#2 (the second indication information), PDCCH#1 scheduling PUSCH#1 (the first uplink signal), and PDCCH#2 scheduling PUSCH#2 (the second uplink signal).

In the example in FIG. 2, PDCCH#1 corresponds to two PDCCH candidates, that is, PDCCH candidate#1-1 and PDCCH candidate#1-2, and PDCCH#2 corresponds to two PDCCH candidates, that is, PDCCH candidate#2-1 and PDCCH candidate#2-2; PUSCH#1 corresponds to PUSCH transmission occasion#1 (the first uplink signal transmission occasion), or, in other words, PUSCH#1 is transmitted at PUSCH transmission occasion#1, and PUSCH#2 corresponds to PUSCH transmission occasion#2 (the second uplink signal transmission occasion), or, in other words, PUSCH#2 is transmitted at PUSCH transmission occasion#2; and PUSCH transmission occasion#1 is prior to PUSCH transmission occasion#2.

In the example in FIG. 2, the first time point A is prior to the second time point B, wherein the first time point A refers to $K(i-i_0)-1$ symbols before PUSCH transmission occasion#i, $K(i-i_0)$ referring to the number of symbols after a last symbol of a PDCCH candidate with an earlier ending symbol corresponding to a corresponding PDCCH and before a first symbol of PUSCH#($i-i_0$), and the second time point B refers to $K(i)$ symbols before PUSCH transmission occasion#i, $K(i)$ referring to the number of symbols after a last symbol of a PDCCH candidate with an earlier ending symbol corresponding to a corresponding PDCCH and before a first symbol of PUSCH#(i). In addition, $i_0$ is used to denote a positive integer, the positive integer corresponding to a smallest positive integer making the time point A corresponding to $K(i-i_0)$ to be prior to the time point B corresponding to $K(i)$.

Specifically, in this example, $i = 2$, and $i_0 = 1$. The first time point A refers to $K(1)-1$ symbols before PUSCH transmission occasion#1, $K(1)$ referring to the number of symbols after a last symbol of a corresponding PDCCH candidate#1-1 and before a first symbol of PUSCH#1, and the second time point B refers to $K(2)$ symbols before PUSCH transmission occasion#2, $K(2)$ referring to the number of symbols after a last symbol of PDCCH candidate#2-1 and before a first symbol of PUSCH#2.

In the example in FIG. 2, the terminal equipment determines the uplink power control parameter corresponding to PUSCH#2 according to the TPC command (or, in other words, a sum of TPC commands) received between the first time point A and the second time point B. That is, the terminal equipment determines the uplink power control parameter corresponding to PUSCH#2 by referring to an ending point of the PDCCH candidates with earlier ending symbols (PDCCH candidate#1-1 and PDCCH candidate#2-1).

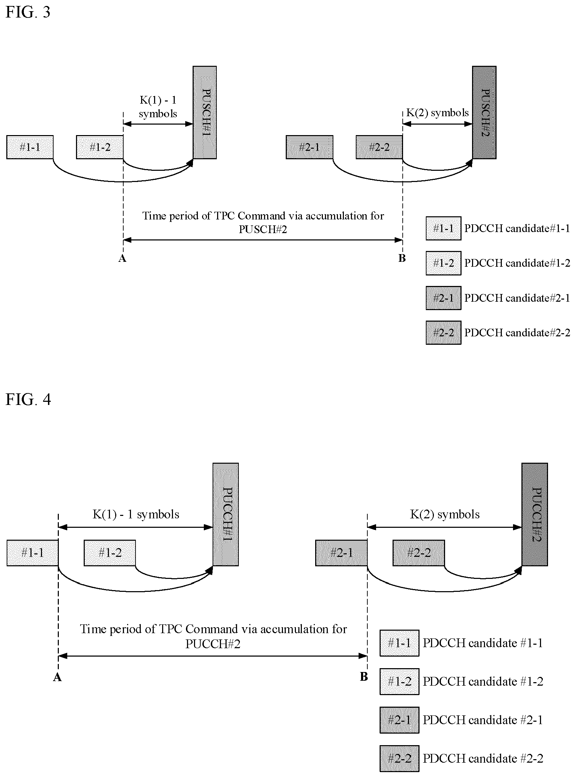

FIG. 3 is another schematic diagram of the case where the first indication information and second indication information are control information and the first uplink signal and second uplink signal are PUSCHs.

As shown in FIG. 3, different from the example in FIG. 2, $K(i-i_0)$ refers to the number of symbols after a last symbol of a PDCCH candidate with a later ending symbol corresponding to a corresponding PDCCH and before a first symbol of PUSCH#($i-i_0$), and the second time point B refers to $K(i)$ symbols before PUSCH transmission occasion#i, $K(i)$ referring to the number of symbols after a last symbol of a PDCCH candidate with a later ending symbol corresponding to a corresponding PDCCH and before a first symbol of PUSCH#(i). Specifically, in this example, $i = 2$, and $i_0 = 1$. $K(1)$ refers to the number of symbols after a last symbol of PDCCH candidate#1-2 and before a first symbol of PUSCH#1, and $K(2)$ refers to the number of symbols after a last symbol of PDCCH candidate#2-2 and before a first symbol of PUSCH#2.

In the example in FIG. 3, the terminal equipment determines an uplink power control parameter corresponding to PUSCH#2 according to a TPC command (or, in other words, a sum of the TPC commands) received between the first time point A and the second time point B. That is, the terminal equipment determines the uplink power control parameter corresponding to PUSCH#2 by referring to an ending point of the PDCCH candidates with later ending symbols (PDCCH candidate#1-2 and PDCCH candidate#2-2).

FIG. 4 is a schematic diagram of a case where the first indication information and second indication information are control information and the first uplink signal and second uplink signal are PUCCHs.

As shown in FIG. 4, the terminal equipment receives PDCCH#1 (the first indication) and PDCCH#2 (the second indication), PDCCH#1 schedules a PDSCH, and the terminal equipment transmits PUCCH#1 (the first uplink signal) to carry HARQ-ACK information to which the PDSCH corresponds; and PDCCH#2 schedules a PDSCH, and the terminal equipment transmits PUSCH#2 (the second uplink signal) to carry HARQ-ACK information to which PDSCH corresponds. This case may be understood as that transmission of the PUCCH is a response to the received PDCCH (DCI format). That is, PUCCH#1 is a response of PDCCH#1, and PUCCH#2 is a response of PDCCH#2.

In the example in FIG. 4, PDCCH#1 corresponds to two PDCCH candidates, that is, PDCCH candidate#1-1 and PDCCH candidate#1-2, and PDCCH#2 corresponds to two PDCCH candidates, that is, PDCCH candidate#2-1 and PDCCH candidate#2-2; PUCCH#1 corresponds to PUCCH transmission occasion#1 (the first uplink signal transmission occasion), or, in other words, PUCCH#1 is transmitted at PUCCH transmission occasion#1; PUCCH#2 corresponds to PUCCH transmission occasion#2 (the second uplink signal transmission occasion), or, in other words, PUCCH#2 is transmitted at PUCCH transmission occasion#2, and PUCCH transmission occasion#1 is prior to PUCCH transmission occasion#2.

In the example in FIG. 4, the first time point A is prior to the second time point B, wherein the first time point A refers to $K(i-i_0)$-1 symbols before PUCCH transmission occasion#i, $K(i-i_0)$ referring to the number of symbols after a last symbol of a PDCCH candidate with an earlier ending symbol corresponding to a corresponding PDCCH and before a first symbol of PUCCH#$(i-i_0)$, and the second time point B refers to $K(i)$ symbols before PUCCH transmission occasion#i, $K(i)$ referring to the number of symbols after a last symbol of a PDCCH candidate with an earlier ending symbol corresponding to a corresponding PDCCH and before a first symbol of PUCCH#$(i)$. In addition, $i_0$ is used to denote a positive integer, the positive integer corresponding to a smallest positive integer making the time point A corresponding to $K(i-i_0)$ to be prior to the time point B corresponding to $K(i)$.

Specifically, in this example, $i = 2$, and $i_0 = 1$. The first time point A refers to $K(1)$-1 symbols before PUCCH transmission occasion#1, $K(1)$ referring to the number of symbols after a last symbol of a PDCCH candidate#1-1 and before a first symbol of PUCCH#1, and the second time point B refers to $K(2)$ symbols before PUCCH transmission occasion#2, $K(2)$ referring to the number of symbols after a last symbol of PDCCH candidate#2-1 and before a first symbol of PUCCH#2.

In the example in FIG. 4, the terminal equipment determines the uplink power control parameter corresponding to PUCCH#2 according to the TPC command (or, in other words, a sum of TPC commands) received between the first time point A and the second time point B. That is, the terminal equipment determines the uplink power control parameter corresponding to PUCCH#2 by referring to an ending point of the PDCCH candidates with earlier ending symbols (PDCCH candidate#1-1 and PDCCH candidate#2-1).

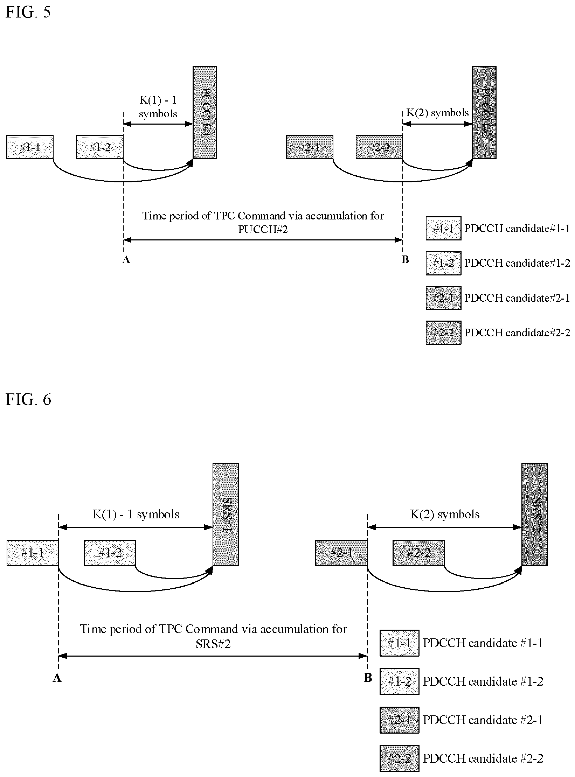

FIG. 5 is another schematic diagram of the case where the first indication information and second indication information are control information and the first uplink signal and second uplink signal are PUCCHs.

As shown in FIG. 5, different from the example in FIG. 4, $K(i-i_0)$ refers to the number of symbols after a last symbol of a PDCCH candidate with a later ending symbol corresponding to a corresponding PDCCH and before a first symbol of PUCCH#$(i-i_0)$, and the second time point B refers to $K(i)$ symbols before PUCCH transmission occasion#i, $K(i)$ referring to the number of symbols after a last symbol of a PDCCH candidate with a later ending symbol corresponding to a corresponding PDCCH and before a first symbol of PUCCH#(i). Specifically, in this example, $i = 2$, and $i_0 = 1$. $K(1)$ refers to the number of symbols after a last symbol of PDCCH candidate#1-2 and before a first symbol of PUCCH#1, and $K(2)$ refers to the number of symbols after a last symbol of PDCCH candidate#2-2 and before a first symbol of PUCCH#2.

In the example in FIG. 5, the terminal equipment determines an uplink power control parameter corresponding to PUCCH#2 according to a TPC command (or, in other words, a sum of the TPC commands) received between the first time point A and the second time point B. That is, the terminal equipment determines the uplink power control parameter corresponding to PUCCH#2 by referring to an ending point of the PDCCH candidates with later ending symbols (PDCCH candidate#1-2 and PDCCH candidate#2-2).

FIG. 6 is a schematic diagram of a case where the first indication information and second indication information are control information and the first uplink signal and second uplink signal are SRSs.

As shown in FIG. 6, the terminal equipment receives PDCCH#1 (the first indication information) and PDCCH#2 (the second indication information), PDCCH#1 triggering an aperiodic SRS#1 (the first uplink signal), and PDCCH#2 triggering an aperiodic SRS#2 (the second uplink signal).

In the example in FIG. 6, PDCCH#1 corresponds to two PDCCH candidates, that is, PDCCH candidate#1-1 and PDCCH candidate#1-2, and PDCCH#2 corresponds to two PDCCH candidates, that is, PDCCH candidate#2-1 and PDCCH candidate#2-2; SRS#1 corresponds to SRS transmission occasion#1 (the first uplink signal transmission occasion), or, in other words, SRS#1 is transmitted at SRS transmission occasion#1, and SRS#2 corresponds to SRS transmission occasion#2 (the second uplink signal transmission occasion), or, in other words, SRS#2 is transmitted at SRS transmission occasion#2; and SRS transmission occasion#1 is prior to SRS transmission occasion#2.

In the example in FIG. 6, the first time point A is prior to the second time point B, wherein the first time point A refers to $K(i-i_0)$-1 symbols before SRS transmission occasion#i, $K(i-i_0)$ referring to the number of symbols after a last symbol of a PDCCH candidate with an earlier ending symbol corresponding to a corresponding PDCCH and before a first symbol of SRS#$(i-i_0)$, and the second time point B refers to $K(i)$ symbols before SRS transmission occasion#i, $K(i)$ referring to the number of symbols after a last symbol of a PDCCH candidate with an earlier ending symbol corresponding to a corresponding PDCCH and before a first symbol of SRS#(i). In addition, $i_0$ is used to denote a positive integer, the positive integer corresponding to a smallest positive integer making the time point A corresponding to $K(i-i_0)$ to be prior to the time point B corresponding to $K(i)$.

Specifically, in this example, $i = 2$, and $i_0 = 1$. The first time point A refers to $K(1)$-1 symbols before SRS transmission occasion#1, $K(1)$ referring to the number of symbols after a last symbol of PDCCH candidate#1-1 and before a first symbol of SRS#1, and the second time point B refers to K(2) symbols before SRS transmission occasion#2, K(2) referring to the number of symbols after a last symbol of PDCCH candidate#2-1 and before a first symbol of SRS#2.

In the example in FIG. 6, the terminal equipment determines an uplink power control parameter corresponding to SRS#2 according to a TPC command (or, in other words, a sum of the TPC commands) received between the first time point A and the second time point B. That is, the terminal equipment determines the uplink power control parameter corresponding to SRS#2 by referring to an ending point of the PDCCH candidates with later ending symbols (PDCCH candidate#1-1 and PDCCH candidate#2-1).

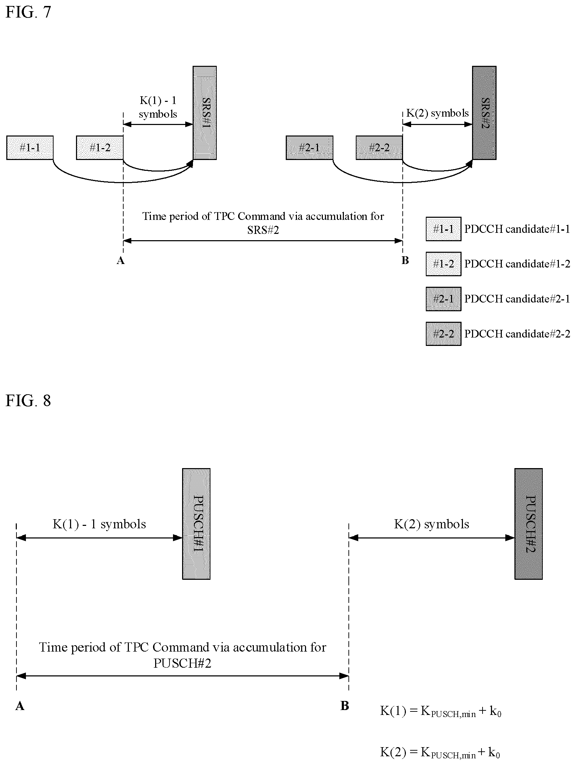

FIG. 7 is another schematic diagram of the case where the first indication information and second indication information are control information and the first uplink signal and second uplink signal are SRSs.

As shown in FIG. 7, different from the example in FIG. 6, $K(i\text{-}i_0)$ refers to the number of symbols after a last symbol of a PDCCH candidate with a later ending symbol corresponding to a corresponding PDCCH and before a first symbol of SRS#$(i\text{-}i_0)$, and the second time point B refers to K($i$) symbols before SRS transmission occasion#i, K($i$) referring to the number of symbols after a last symbol of a PDCCH candidate with a later ending symbol corresponding to a corresponding PDCCH and before a first symbol of SRS#($i$). Specifically, in this example, $i$ = 2, and $i_0$ = 1. K(1) refers to the number of symbols after a last symbol of PDCCH candidate#1-2 and before a first symbol of SRS#1, and K(2) refers to the number of symbols after a last symbol of PDCCH candidate#2-2 and before a first symbol of SRS#2.

In the example in FIG. 7, the terminal equipment determines an uplink power control parameter corresponding to SRS#2 according to a TPC command (or, in other words, a sum of the TPC commands) received between the first time point A and the second time point B. That is, the terminal equipment determines the uplink power control parameter corresponding to SRS#2 by referring to an ending point of the PDCCH candidates with later ending symbols (PDCCH candidate#1-2 and PDCCH candidate#2-2).

In the embodiment of this disclosure, if the first indication information and/or the second indication information is/are configuration grant information, or the first uplink signal and/or the second uplink signal is/are not in response to received downlink control information (DCI), or the first uplink signal and/or the second uplink signal is/are a semi-persistent or periodic sounding reference signal(s) (SRS(s)), the terminal equipment determines the time interval between the first time point and/or the second time point and the corresponding uplink signal transmission occasion according to whether to monitor the control information corresponding to the two PDCCH candidates, and further determines the uplink power control parameter of the second uplink signal according to the transmit power control (TPC) command received between the first time point and the second time point.

For example, when the terminal equipment monitors the control information corresponding to the two PDCCH candidates (or, in other words, when the terminal equipment is configured with/monitors the control information corresponding to the two PDCCH candidates according to the configuration information), the time interval is related to at least one of the following parameters: a minimum value ($K_{PUSCH,min}$) (in units of slots) of a slot interval (k2) between control information in a cell-level PUSCH configuration parameter (such as PUSCH-ConfigCommon) and a corresponding uplink PUSCH; the number of symbols per slot ($N_{symb\text{-}slot}$); and a time interval ($k_0$) that is predefined or configured by RRC signaling.

The time interval that is predefined or configured by RRC signaling is applicable to the case where the terminal equipment monitors the control information corresponding to the two PDCCH candidates.

FIG. 8 is a schematic diagram of a case where the first indication information and second indication information are configuration grant information and the first uplink signal and the second uplink signal are PUSCHs.

As shown in FIG. 8, the terminal equipment transmits PUSCH#1 (the first uplink signal) and PUSCH#2 (the second uplink signal) according to the received configuration grant information, wherein PUSCH#1 corresponds to a piece of configuration grant information (the first indication information) and PUSCH#2 corresponds to a piece of configuration grant information (the second indication information).

In the example in FIG. 8, PUSCH#1 corresponds to PUSCH transmission occasion#1 (the first uplink signal transmission occasion), or, in other words, PUSCH#1 is transmitted at PUSCH transmission occasion#1; PUSCH#2 corresponds to PUSCH transmission occasion#2 (the second uplink signal transmission occasion), or, in other words, PUSCH#2 is transmitted at PUSCH transmission occasion#2; and PUSCH transmission occasion#1 is prior to PUSCH transmission occasion#2.

In the example of FIG. 8, the first time point A is prior to the second time point B, wherein the first time point A refers to the $K(i\text{-}i_0)$-1 symbols before PUSCH transmission occasion#i, and the second time point B refers to K($i$) symbols before PUSCH transmission occasion#i, wherein, the number of symbols to which $K(i\text{-}i_0)$ and K($i$) correspond is equal to

$$N_{symb}^{slot} * K_{PUSCH,min} + k_0$$ ; where, $N_{symb}^{slot}$ is the number of symbols of each slot, $K_{PUSCH,min}$ is a minimum value (in units of slots) in values provided by k2 in PUSCH-ConfigCommon, $k_0$ is preconfigured (such as by RRC signaling) or predefined, which is in units of symbols. In addition, $i_0$ is used to denote a positive integer, the positive integer corresponding to a smallest positive integer making the time point A corresponding to $K(i-i_0)$ to be prior to the time point B corresponding to $K(i)$.

Specifically, in this example, $i = 2$, and $i_0 = 1$. The first time point A refers to $K(1)$-1 symbols before PUSCH transmission occasion#1, and the second time point B refers to $K(2)$ symbols before PUSCH transmission occasion#2. Reference may be made to the above formula for methods for calculating values of $K(1)$ and $K(2)$.

In the example in FIG. 8, the terminal equipment determines the uplink power control parameter corresponding to PUSCH#2 according to the TPC command (or, in other words, a sum of the TPC commands) received between the first time point A and the second time point B determined by $K(1)$ and $K(2)$.

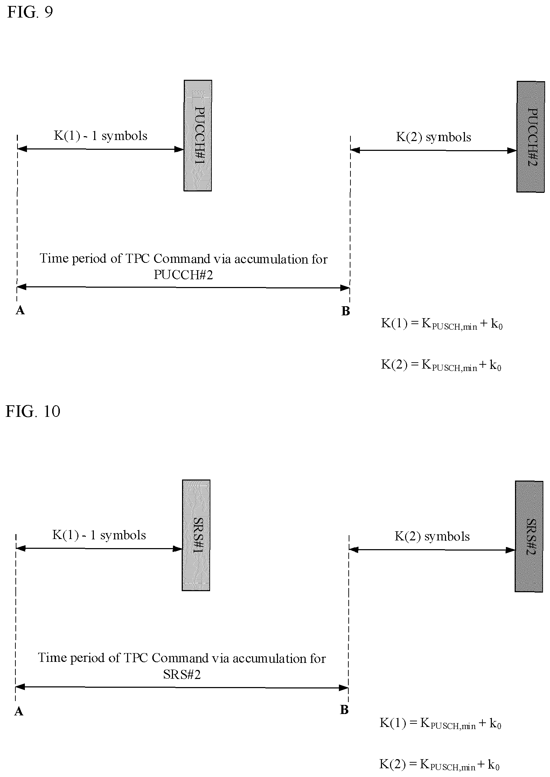

FIG. 9 is a schematic diagram of a case where the first uplink signal and the second uplink signal are not in response to the received downlink control information (DCI) (or in other words, there is no corresponding DCI/PDCCH).

As shown in FIG. 9, the terminal equipment transmits PUCCH#1 (the first uplink signal) and PUCCH#2 (the second uplink signal) according to the received indication information, wherein PUCCH#1 is not used to make a response to the received DCI, and PUCCH#2 is not used to make a response to the received DCI. Here, PUCCH#1 is transmitted according to indication of a corresponding PUCCH configuration information and/or MAC-CE signaling (the first indication information), and PUCCH#2 is transmitted according to indication of a corresponding PUCCH configuration information and/or MAC-CE signaling (the second indication information).

In the example in FIG. 9, PUCCH#1 corresponds to PUCCH transmission occasion#1 (the first uplink signal transmission occasion), or, in other words, PUCCH#1 is transmitted at PUCCH transmission occasion#1; PUCCH#2 corresponds to PUCCH transmission occasion#2 (the second uplink signal transmission occasion), or, in other words, PUCCH#2 is transmitted at PUCCH transmission occasion#2; and PUCCH transmission occasion#1 is prior to PUCCH transmission occasion#2.

In the example in FIG. 9, the first time point A is prior to the second time point B, wherein the first time point A refers to $K(i-i_0)$-1 symbols before PUCCH transmission occasion#i, and the second time point B refers to $K(i)$ symbols before PUCCH transmission occasion#i, wherein, the number of symbols to which $K(i-i_0)$ and $K(i)$ correspond is equal to $N_{symb}^{slot} * K_{PUCCH,min} + k_0$;

where, $N_{symb}^{slot}$ is the number of symbols of each slot, $K_{PUCCH,min}$ is a minimum value (in units of slots) in values provided by k2 in PUSCH-ConfigCommon, $k_0$ is preconfigured (such as by RRC signaling) or predefined, which is in units of symbols. In addition, $i_0$ is used to denote a positive integer, the positive integer corresponding to a smallest positive integer making the time point A corresponding to $K(i-i_0)$ to be prior to the time point B corresponding to $K(i)$.

Specifically, in this example, $i = 2$, and $i_0 = 1$. The first time point A refers to $K(1)$-1 symbols before PUCCH transmission occasion#1, and the second time point B refers to $K(2)$ symbols before PUCCH transmission occasion#2.

In the example in FIG. 9, the terminal equipment determines the uplink power control parameter corresponding to PUCCH#2 according to the TPC command (or, in other words, a sum of the TPC commands) received between the first time point A and the second time point B determined by $K(1)$ and $K(2)$.

FIG. 10 is a schematic diagram of a case where the first uplink signal and the second uplink signal are semi-persistent or periodic sounding reference signals (SRSs).

As shown in FIG. 10, the terminal equipment transmits SRS#1 (the first uplink signal) and SRS#2 (the second uplink signal) according to the received indication information, wherein SRS#1 is a semi-persistent or periodic sounding reference signal. Here, SRS#1 is transmitted according to an indication of a corresponding SRS configuration information (the first indication information), and SRS#2 is transmitted according to an indication of a corresponding SRS configuration information (the second indication information).

In the example in FIG. 10, SRS#1 corresponds to SRS transmission occassion#1 (the first uplink signal transmission occasion), or, in other words, SRS#1 is transmitted at SRS transmission occassion#1, and SRS#2 corresponds to SRS transmission occasion#2 (the second uplink signal transmission occasion), or, in other words, SRS#2 is transmitted at SRS transmission occasion#2; and SRS transmission occasion#1 is prior to SRS transmission occasion#2.

In the example in FIG. 10, the first time point A is prior to the second time point B, wherein the first time point A refers to $K(i-i_0)$-1 symbols before SRS transmission occasion#i, and the second time point B refers to $K(i)$ symbols before SRS transmission occasion#i, wherein, the number of symbols to which $K(i-i_0)$ and $K(i)$ correspond is equal to $N_{symb}^{slot} * K_{SRS,min} + k_0$;

where, $N_{symb}^{slot}$ is the number of symbols of each slot, $K_{SRS,min}$ is a minimum value (in units of slots) in values provided by k2 in PUSCH-ConfigCommon, $k_0$ is preconfigured (such as by RRC signaling) or predefined, which is in units of symbols. In addition, $i_0$ is used to denote a positive integer, the positive integer corresponding to a smallest positive integer making the time point A corresponding to $K(i-i_0)$ to be prior to the time point B corresponding to K($i$).

Specifically, in this example, $i = 2$, and $i_0 = 1$. The first time point A refers to K(1)-1 symbols before SRS transmission occasion#1, and the second time point B refers to K(2) symbols before SRS transmission occasion#2. Reference may be made to the above formula for methods for calculating values of K(1) and K(2).

In the example in FIG. 10, the terminal equipment determines the uplink power control parameter corresponding to PUCCH#2 according to the TPC command (or, in other words, a sum of the TPC commands) received between the first time point A and the second time point B determined by K(1) and K(2).

According to the examples in FIGs. 8-10, in the scenario of multi-TRP PDCCHs, in comparison with a scenario of only receiving single-TRP PDCCHs, calculation of uplink power is more complex and requires more time to be reserved. Therefore, in the scenario where the terminal equipment monitors multi-TRP PDCCHs, the method of this disclosure reserves more time (k0) compared to the scenario where only single-TRP PDCCHs ($K_{PUCCH, min}$ * N) are monitored, so that the terminal equipment is able to complete calculation of parameters related to uplink power control in a timely manner. This method ensures that terminal equipment is able to complete calculation of corresponding uplink power control parameters with no need of stronger processing capabilities, which is beneficial to controlling cost of the terminal equipment.

It should be noted that the above implementations only illustrate the embodiment of this disclosure. However, this disclosure is not limited thereto, and appropriate variants may be made on the basis of these implementations. For example, the above implementations may be executed separately, or one or more of them may be executed in a combined manner.

For example, the first time point A may correspond to the first time point A in the scenarios in FIGs. 2-7, and the second time point B may correspond to the second time point B in the scenarios in FIGs. 8-10; or, the second time point B may correspond to the second time point B in the scenarios in FIGs. 2-7, and the first time point A may correspond to the first time point A in the scenarios in FIGs. 8-10.

In addition, the steps or processes related to this disclosure are only described above; however, this disclosure is not limited thereto. The method of the embodiment of this disclosure may also include other steps or processes, and reference may be made to relevant techniques for specific contents of these steps or processes. Furthermore, orders of execution of the steps or processes are not limited in this disclosure; for example, 101 and 102 may be executed in parallel, or 102 may be executed first, and then 101 is executed.

According to the method of the embodiment of this disclosure, in a case where the terminal equipment is able to monitor multi-TRP PDCCHs, the terminal equipment and the network device may have unified understanding of the starting times and ending times with PDCCHs as references.

Embodiment of a second aspect

In a scenario of another example of the embodiment of this disclosure, the power control information of the uplink signal may be reported via a power headroom report (PHR), wherein, calculation of the PHR needs to take indication information within a time range into account. It should be noted that an ending point of the time range is related to a PDCCH monitoring occasion corresponding to a PDCCH. Therefore, when the PDCCH corresponds to two PDCCH candidates and these two PDCCH candidates correspond to different PDCCH monitoring occasions, a position of the ending point of the time range is ambiguous. In order to solve this problem, the embodiment of this disclosure provides a corresponding method for how to determine a time range referenced in calculating a PHR in a case where the terminal equipment has ability to monitor multi-TRP PDCCHs.

The embodiment of this disclosure provides a signal transmission method, which shall be described from a terminal equipment side.

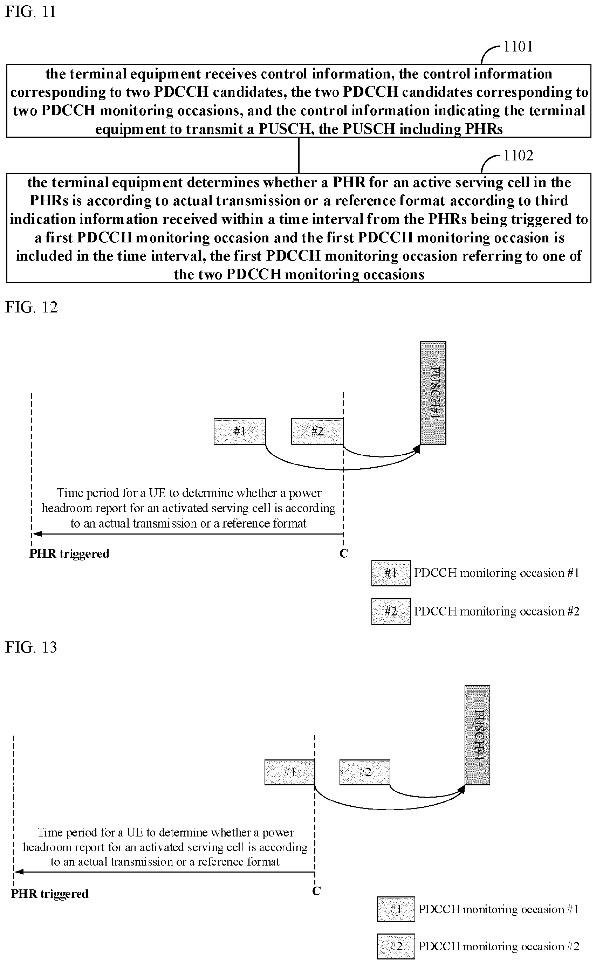

FIG. 11 is a schematic diagram of the signal transmission method of the embodiment of this disclosure. As shown in FIG. 11, the method includes:

1101: the terminal equipment receives control information, the control information corresponding to two PDCCH candidates, the two PDCCH candidates corresponding to two PDCCH monitoring occasions, and the control information indicating the terminal equipment to transmit a PUSCH, the PUSCH including PHRs; and

1102: the terminal equipment determines whether a PHR for an active serving cell in the PHRs is according to actual transmission or a reference format according to third indication information received within a time interval from the PHRs being triggered to a first PDCCH monitoring occasion and the first PDCCH monitoring occasion is included in the time interval, the first PDCCH monitoring occasion referring to one of the two PDCCH monitoring occasions.

According to the embodiment of this disclosure, when the PDCCH corresponds to two PDCCH candidates and these two PDCCH candidates correspond to different PDCCH monitoring occasions, the terminal equipment determines an ending point of a time range for obtaining third indication information according to one of the two PDCCH monitoring occasions. Therefore, the terminal equipment and the network device may have unified understanding of the starting times and ending times with PDCCHs as references.

In the embodiment of this disclosure, the two PDCCH monitoring occasions to which the two PDCCH candidates correspond are different.

In the embodiment of this disclosure, the third indication information refers to at least one of the following: configuration grant information; periodic or semi-persistent SRS transmission information; and downlink control information (DCI). The terminal equipment determines whether there exists actual transmission according to the third indication information received within the above time range. For example, if DCI scheduling information or configuration permission indication information or periodic or semi-persistent SRS transmission information is received within the above time range, the terminal equipment reports a corresponding PHR according to actual transmission in a corresponding cell; otherwise, it calculates the PHR of the corresponding cell according to the reference format.

In the embodiment of this disclosure, the control information schedules an initial transmission of a transport block (TB).

In some embodiments, the first PDCCH monitoring occasion is a later PDCCH monitoring occasion in a time domain in the two PDCCH monitoring occasions. That is, the terminal equipment determine the ending point of the time range with reference to the later PDCCH monitoring occasion in the time domain.

FIG. 12 is a schematic diagrams of an example of reporting the PHR via a PUSCH scheduled by a DCI format.

As shown in FIG. 12, the terminal equipment receives a DCI format (control information), which schedules PUSCH#1 (PUSCH), wherein, the DCI format corresponds to two PDCCH candidates, and the two PDCCH candidates correspond to different PDCCH monitoring occasions; in addition, the DCI format schedules an initial transmission of a transport block (TB); and PUSCH#1 carries the PHR.

In the example in FIG. 12, according to the indication information (referred to as third indication information) received within a time range from the PHR is triggered to a later PDCCH monitoring occasion (PDCCH monitoring occasion#2) to which the DCI format corresponds (the time range including the PDCCH monitoring occasion), the terminal equipment determines whether a PHR of an active serving cell corresponding to this PHR is according to an actual transmission or a reference format.

In some embodiments, the first PDCCH monitoring occasion is an earlier PDCCH monitoring occasion in a time domain in the two PDCCH monitoring occasions. That is, the terminal equipment determines the ending point of the time range with reference to the PDCCH monitoring occasion earlier in the time domain.

FIG. 13 is a schematic diagram of another example of reporting the PHR via the PUSCH scheduled by the DCI format.

As shown in FIG. 13, different from the example in FIG. 12, according to the indication information (referred to as third indication information) received within a time range from the PHR is triggered to an earlier PDCCH monitoring occasion (PDCCH monitoring occasion#1) to which the DCI format corresponds (the time range including the PDCCH monitoring occasion), the terminal equipment determines whether a PHR of an active serving cell corresponding to this PHR is according to an actual transmission or a reference format.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

The steps or processes related to this disclosure are only described above; however, this disclosure is not limited thereto. The method of the embodiment of this disclosure may also include other steps or processes, and reference may be made to relevant techniques for specific contents of these steps or processes.

According to the method of the embodiment of this disclosure, in a case where the terminal equipment has ability to monitor multi-TRP PDCCHs, the terminal equipment and the network device may have unified understanding of the starting times and ending times with PDCCHs as references.

Embodiment of a third aspect

The embodiment of this disclosure provides a signal transmission apparatus. The apparatus may be, for example, a terminal equipment, or may also be one or more components or assemblies configured in the terminal equipment.

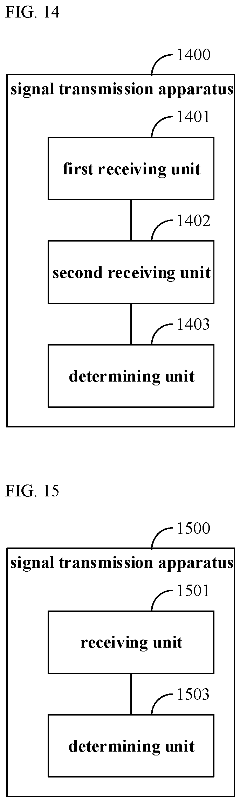

FIG. 14 is a schematic diagram of the signal transmission apparatus of the embodiment of this disclosure. As principles of the apparatus for solving problems are identical to that of the method in the embodiment of the first aspect, reference may be made to the implementation of the method in the embodiment of the first aspect for implementation of the apparatus, with identical contents being not going to be repeated herein any further.

As shown in FIG. 14, the signal transmission apparatus 1400 of the embodiment of this disclosure includes:

a first receiving unit 1401 configured to receive first indication information, the first indication information indicating the terminal equipment to transmit a first uplink signal, wherein the first uplink signal corresponds to a first uplink signal transmission occasion;
a second receiving unit 1402 configured to receive second indication information, the second indication information indicating the terminal equipment to transmit a second uplink signal, wherein the second uplink signal corresponds to a second uplink signal transmission occasion; and
a determining unit 1403 configured to determine an uplink power control parameter of the second uplink signal according to a transmit power control (TPC) command received between a first time point and a second time point;

wherein,

the first time point is prior to the first uplink signal transmission occasion;

the second time point is prior to the second uplink signal transmission occasion;

a time interval between the first time point and/or the second time point and the corresponding uplink signal transmission occasion satisfies at least one of the following conditions that:

if the first indication information and/or the second indication information is/are control information and the control information corresponds to two PDCCH candidates, the time interval is determined according to one of the two PDCCH candidates;

if the first indication information and/or the second indication information is/are configuration grant information, the time interval is related to whether the terminal equipment monitors control information corresponding to the two PDCCH candidates;

if the first uplink signal and/or the second uplink signal is/are not in response to received downlink control information (DCI), the time interval is related to whether the terminal equipment monitors control information corresponding to the two PDCCH candidates; and

if the first uplink signal and/or the second uplink signal is/are a semi-persistent or periodic sounding reference signal(s) (SRS(s)), the time interval is related to whether the terminal equipment monitors control information corresponding to the two PDCCH candidates.

In some embodiments, the first time point is prior to the second time point.

In some embodiments, the first uplink signal transmission occasion is a latest uplink signal transmission occasion ensuring that the first time point is prior to the second time point before the second uplink signal transmission occasion.

In some embodiments, that the time interval is determined according to one of the two PDCCH candidates refers to that the time interval is determined according to an ending symbol of one of the two PDCCH candidates and a first symbol of the corresponding uplink signal transmission occasion.

In some embodiments, one of the two PDCCH candidates refers to one of the following:

a PDCCH candidate with an earlier starting symbol in the two PDCCH candidates;

a PDCCH candidate with an earlier ending symbol in the two PDCCH candidates;

a PDCCH candidate with a later starting symbol in the two PDCCH candidates; and

a PDCCH candidate with a later ending symbol in the two PDCCH candidates.

In some embodiments, that the time interval is related to whether the terminal equipment monitors control information corresponding to two PDCCH candidates refers to that when the terminal equipment monitors the control information corresponding to the two PDCCH candidates, the time interval is related to at least one of the following parameters:

a minimum value (k2) of a slot interval between control information and a corresponding uplink PUSCH in a cell-level PUSCH configuration parameter;

the number of symbols per slot ($N_{symb-slot}$); and

a time interval ($k_0$) that is predefined or configured by RRC signaling.

In some embodiments, the time interval that is predefined or configured by RRC signaling is applicable to the case where the terminal equipment monitors the control information corresponding to the two PDCCH candidates.

In some embodiments, the first uplink signal and the second uplink signal are respectively at least one of the following: a PUSCH, a PUCCH, and an SRS.

FIG. 15 is another schematic diagram of the signal transmission apparatus of the embodiment of this disclosure. As principles of the apparatus for solving problems are identical to that of the method in the embodiment of the second aspect, reference may be made to the implementation of the method in the embodiment of the second aspect for implementation of the apparatus, with identical contents being not going to be repeated herein any further.

As shown in FIG. 15, the signal transmission apparatus 1500 of the embodiment of this disclosure includes:

a receiving unit 1501 configured to receive control information, the control information corresponding to two PDCCH candidates, the two PDCCH candidates corresponding to two PDCCH monitoring occasions, and the control information indicating the terminal equipment to transmit a PUSCH, the PUSCH including PHRs; and

a determining unit 1502 configured to, according to third indication information received within a time interval from the PHRs being triggered to a first PDCCH monitoring occasion and the first PDCCH monitoring occasion is included in the time interval, determine whether a PHR for an active serving cell in the PHRs is according to actual transmission or a reference format, the first PDCCH monitoring occasion referring to one of the two PDCCH monitoring occasions.

In some embodiments, the first PDCCH monitoring occasion is a later PDCCH monitoring occasion in a time domain in the two PDCCH monitoring occasions.

In some embodiments, the first PDCCH monitoring occasion is an earlier PDCCH monitoring occasion in a time domain in the two PDCCH monitoring occasions.

In some embodiments, the two PDCCH monitoring occasions to which the two PDCCH candidates correspond are different.

In some embodiments, the third indication information refers to at least one of the following:

configuration grant information;
periodic or semi-persistent SRS transmission information; and
downlink control information (DCI).

In some embodiments, the control information schedules an initial transmission of a TB.

It should be noted that the components or modules related to this disclosure are only described above. However, this disclosure is not limited thereto, and the signal transmission apparatus 1400/1500 may further include other components or modules, and reference may be made to related techniques for particulars of these components or modules.

Furthermore, for the sake of simplicity, connection relationships between the components or modules or signal profiles thereof are only illustrated in FIGs. 14 and 15. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the apparatus of the embodiment of this disclosure, in a case where the terminal equipment has ability to monitor multi-TRP PDCCHs, the terminal equipment and the network device may have unified understanding of the starting times and ending times with PDCCHs as references.

Embodiment of a fourth aspect

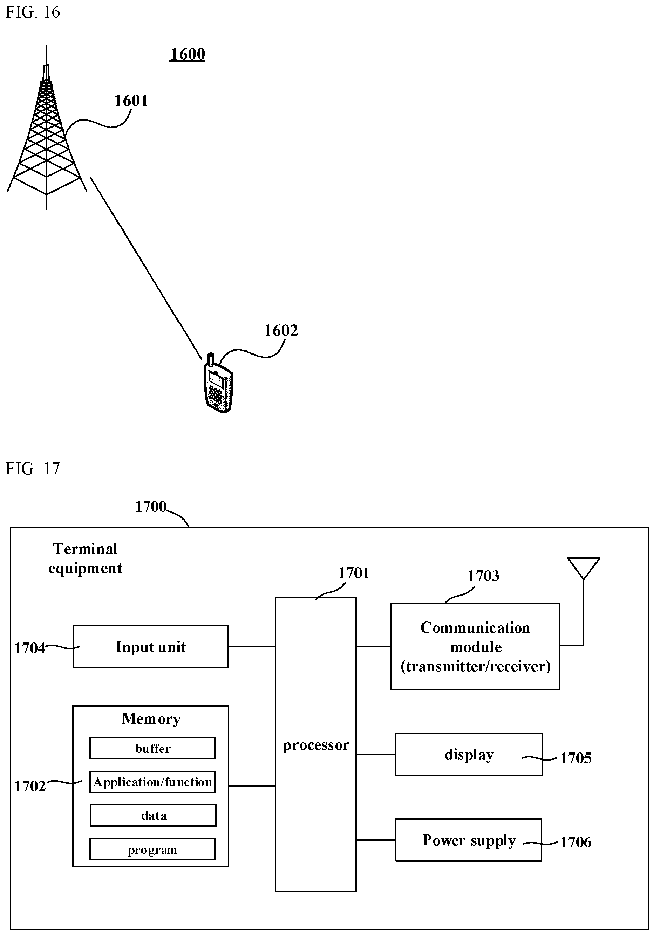

The embodiment of this disclosure provides a communication system. FIG. 16 is a schematic diagram of the communication system of the embodiment of this disclosure. As shown in FIG. 16, the communication system 1600 includes a network device 1601 and a terminal equipment 1602. For the sake of simplicity, an example having only one terminal equipment and one network device is schematically given in FIG. 16; however, the embodiments of this disclosure are not limited thereto.

In the embodiment of this disclosure, existing traffics or traffics that may be implemented in the future may be performed between the network device 1601 and the terminal equipment 1602. For example, such traffics may include but not limited to enhanced mobile broadband (eMBB), massive machine type communication (MTC), and ultra-reliable and low-latency communication (URLLC), etc.

In some embodiments, the network device 1601 generates first indication information and second indication information, and transmits the first indication information and second indication information to the terminal equipment 1602, the first indication information indicating the terminal equipment to transmit a first uplink signal; wherein, the first uplink signal corresponds to a first uplink signal transmission occasion, and the second indication information indicates the terminal equipment to transmits a second uplink signal; wherein, the second uplink signal corresponds to a second uplink signal transmission occasion; and the terminal equipment 1602 receives the first indication information and second indication information, and determines an uplink power control parameter of the second uplink signal according to a transmit power control (TPC) command received between a first time point and a second time point.

In the above embodiment, the first time point is prior to the first uplink signal transmission occasion, the second time point is prior to the second uplink signal transmission occasion, and a time interval between the first time point and/or the second time point and the corresponding uplink signal transmission occasion satisfies at least one of the following conditions that:

if the first indication information and/or the second indication information is/are control information and the control information corresponds to two PDCCH candidates, the time interval is determined according to one of the two PDCCH candidates;
if the first indication information and/or the second indication information is/are configuration grant information, the time interval is related to whether the terminal equipment monitors control information corresponding to the two PDCCH candidates;
if the first uplink signal and/or the second uplink signal is/are not in response to received downlink control information (DCI), the time interval is related to whether the terminal equipment monitors control information corresponding to the two PDCCH candidates; and
if the first uplink signal and/or the second uplink signal is/are a semi-persistent or periodic sounding reference signal(s) (SRS(s)), the time interval is related to whether the terminal equipment monitors control information corresponding to the two PDCCH candidates.

In the above embodiment, contents of the network device 1601 are not limited in this disclosure, and contents of the terminal equipment 1602 are identical to those in the embodiment of the first aspect, which shall not be repeated herein any further.

In some embodiments, the network device 1601 generates control information, and transmits the control information to the terminal equipment 1602, the control information corresponding to two PDCCH candidates, the two PDCCH candidates corresponding to two PDCCH monitoring occasions, and the control information indicating the terminal equipment to transmit a PUSCH, the PUSCH containing a PHR; the terminal equipment 1602 receives the control information, and according to third indication information received within a time interval from the PHRs being triggered to a first PDCCH monitoring occasion and the first PDCCH monitoring occasion is included in the time interval, determines whether a PHR for an active serving cell in the PHRs is according to actual transmission or a reference format, the first PDCCH monitoring occasion referring to one of the two PDCCH monitoring occasions.

In the above embodiment, contents of the network device 1601 are not limited in this disclosure, and contents of the terminal equipment 1602 are identical to those in the embodiment of the second aspect, which shall not be repeated herein any further.

The embodiment of this disclosure further provides a terminal equipment, which may be, for example, a UE; however, this disclosure is not limited thereto, and it may also be another equipment.

FIG. 17 is a schematic diagram of the terminal equipment of the embodiment of this disclosure. As shown in FIG. 17, the terminal equipment 1700 may include a processor 1701 and a memory 1702, the memory 1702 storing data and a program and being coupled to the processor 1701. It should be noted that this figure is illustrative only, and other types of structures may also be used, so as to supplement or replace this structure and achieve a telecommunications function or other functions.

For example, the processor 1701 may be configured to execute a program to carry out the method as described in the embodiment of the first or the second aspect.

As shown in FIG. 17, the terminal equipment 1700 may further include a communication module 1703, an input unit 1704, a display 1705, and a power supply 1706; wherein functions of the above components are similar to those in the related art, which shall not be described herein any further. It should be noted that the terminal equipment 1700 does not necessarily include all the parts shown in FIG. 17, and the above components are not necessary. Furthermore, the terminal equipment 1700 may include parts not shown in FIG. 17, and the related art may be referred to.

An embodiment of this disclosure provides a computer readable program, which, when executed in a terminal equipment, will cause the terminal equipment to carry out the method as described in the embodiment of the first or the second aspect.

An embodiment of this disclosure provides a storage medium storing a computer readable program, which will cause a terminal equipment to carry out the method as described in the embodiment of the first or the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs a MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

As to implementations containing the above embodiments, following supplements are further disclosed.

1. A signal transmission method, wherein the method includes:

receiving first indication information by a terminal equipment, the first indication information indicating the terminal equipment to transmit a first uplink signal, wherein the first uplink signal corresponds to a first uplink signal transmission occasion;

receiving second indication information by the terminal equipment, the second indication information indicating the terminal equipment to transmit a second uplink signal, wherein the second uplink signal corresponds to a second uplink signal transmission occasion; and

determining an uplink power control parameter of the second uplink signal by the terminal equipment according to a transmit power control (TPC) command received between a first time point and a second time point;

wherein,

the first time point is prior to the first uplink signal transmission occasion;

the second time point is prior to the second uplink signal transmission occasion;

a time interval between the first time point and/or the second time point and the corresponding uplink signal transmission occasion satisfies at least one of the following conditions that:

if the first indication information and/or the second indication information is/are control information and the control information corresponds to two PDCCH candidates, the time interval is determined according to one of the two PDCCH candidates;

if the first indication information and/or the second indication information is/are configuration grant information, the time interval is related to whether the terminal equipment monitors control information corresponding to the two PDCCH candidates;

if the first uplink signal and/or the second uplink signal is/are not in response to received downlink control information (DCI), the time interval is related to whether the terminal equipment monitors control information corresponding to the two PDCCH candidates; and

if the first uplink signal and/or the second uplink signal is/are a semi-persistent or periodic sounding reference signal(s) (SRS(s)), the time interval is related to whether the terminal equipment monitors control information corresponding to the two PDCCH candidates.

2. The method according to supplement 1, wherein that the time interval is determined according to one of the two PDCCH candidates refers to that,
the time interval is determined according to an ending symbol of one of the two PDCCH candidates and a first symbol of the corresponding uplink signal transmission occasion.

3. The method according to supplement 1 or 2, wherein one of the two PDCCH candidates refers to one of the following:

a PDCCH candidate with an earlier starting symbol in the two PDCCH candidates;
a PDCCH candidate with an earlier ending symbol in the two PDCCH candidates;
a PDCCH candidate with a later starting symbol in the two PDCCH candidates; and
a PDCCH candidate with a later ending symbol in the two PDCCH candidates.

4. The method according to supplement 1, wherein that the time interval is related to whether the terminal equipment monitors control information corresponding to two PDCCH candidates refers to that,
when the terminal equipment monitors the control information corresponding to the two PDCCH candidates, the time interval is related to at least one of the following parameters:

a minimum value (k2) of a slot interval between control information and a corresponding uplink PUSCH in a cell-level PUSCH configuration parameter;
the number of symbols per slot ($N_{symb\text{-}slot}$); and
a time interval ($k_0$) that is predefined or configured by RRC signaling.

5. The method according to supplement 4, wherein the time interval that is predefined or configured by RRC signaling is applicable to a situation where the terminal equipment monitors the control information corresponding to the two PDCCH candidates.

6. The method according to supplement 1, wherein, the first time point is prior to the second time point.

7. The method according to supplement 1, wherein, the first uplink signal transmission occasion is a latest uplink signal transmission occasion prior to the second uplink signal transmission occasion that ensures that the first time point is prior to the second time point.

8. The method according to any one of supplements 1-7, wherein,
the first uplink signal and the second uplink signal are respectively at least one of the following: a PUSCH, a PUCCH, and an SRS.

9. A signal transmission method, wherein the method includes:

> receiving control information by a terminal equipment, the control information corresponding to two PDCCH candidates, the two PDCCH candidates corresponding to two PDCCH monitoring occasions, and the control information indicating the terminal equipment to transmit a PUSCH, the PUSCH including PHRs; and
> according to third indication information received within a time interval from the PHRs being triggered to a first PDCCH monitoring occasion and the first PDCCH monitoring occasion is included in the time interval, determining by the terminal equipment whether a PHR for an active serving cell in the PHRs is according to actual transmission or a reference format;
> the first PDCCH monitoring occasion referring to one of the two PDCCH monitoring occasions.

10. The method according to supplement 9, wherein, the first PDCCH monitoring occasion is a later PDCCH monitoring occasion in a time domain in the two PDCCH monitoring occasions.

11. The method according to supplement 9, wherein, the first PDCCH monitoring occasion is an earlier PDCCH monitoring occasion in a time domain in the two PDCCH monitoring occasions.

12. The method according to any one of supplements 9-11, wherein,
the two PDCCH monitoring occasions to which the two PDCCH candidates correspond are different.

13. The method according to supplement 9, wherein, the third indication information refers to at least one of the following:

> configuration grant information;
> periodic or semi-persistent SRS transmission information; and
> downlink control information (DCI).

14. The method according to supplement 9, wherein, the control information schedules an initial transmission of a transport block.

15. A terminal equipment, including a memory and a processor, the memory storing a computer program, and the processor being configured to execute the computer program to carry out the method as described in any one of supplements 1-14.

16. A communication system, including a terminal equipment and a network device, wherein,
the terminal equipment is configured to:

> receive first indication information, the first indication information indicating the terminal equipment to transmit a first uplink signal, wherein the first uplink signal corresponds to a first uplink signal transmission occasion;
> receive second indication information, the second indication information indicating the terminal equipment to transmit a second uplink signal, wherein the second uplink signal corresponds to a second uplink signal transmission occasion; and
> determine an uplink power control parameter of the second uplink signal according to a transmit power control (TPC) command received between a first time point and a second time point; wherein,
> the first time point is prior to the first uplink signal transmission occasion;
> the second time point is prior to the second uplink signal transmission occasion;
> a time interval between the first time point and/or the second time point and the corresponding uplink signal transmission occasion satisfies at least one of the following conditions that:

>> if the first indication information and/or the second indication information is/are control information and the control information corresponds to two PDCCH candidates, the time interval is determined according to one of the two PDCCH candidates;
>> if the first indication information and/or the second indication information is/are configuration grant information, the time interval is related to whether the terminal equipment monitors control information corresponding to the two PDCCH candidates;
>> if the first uplink signal and/or the second uplink signal is/are not in response to received downlink control information (DCI), the time interval is related to whether the terminal equipment monitors control information corresponding to the two PDCCH candidates; and
>> if the first uplink signal and/or the second uplink signal is/are a semi-persistent or periodic sounding reference signal(s) (SRS(s)), the time interval is related to whether the terminal equipment monitors control information corresponding to the two PDCCH candidates.

17. A communication system, including a terminal equipment and a network device, wherein,
the terminal equipment is configured to:

receive control information, the control information corresponding to two PDCCH candidates, the two PDCCH candidates corresponding to two PDCCH monitoring occasions, and the control information indicating the terminal equipment to transmit a PUSCH, the PUSCH including PHRs; and
according to third indication information received within a time interval from the PHRs being triggered to a first PDCCH monitoring occasion and the first PDCCH monitoring occasion is included in the time interval, determine whether a PHR for an active serving cell in the PHRs is according to actual transmission or a reference format;
the first PDCCH monitoring occasion referring to one of the two PDCCH monitoring occasions; and the network device is configured to transmit the control information to the terminal equipment.

**Claims**

1. A signal transmission apparatus, configured in a terminal equipment, wherein the apparatus comprises:

a first receiving unit configured to receive first indication information, the first indication information indicating the terminal equipment to transmit a first uplink signal, wherein the first uplink signal corresponds to a first uplink signal transmission occasion;
a second receiving unit configured to receive second indication information, the second indication information indicating the terminal equipment to transmit a second uplink signal, wherein the second uplink signal corresponds to a second uplink signal transmission occasion; and
a determining unit configured to determine an uplink power control parameter of the second uplink signal according to a transmit power control (TPC) command received between a first time point and a second time point;
wherein,
the first time point is prior to the first uplink signal transmission occasion;
the second time point is prior to the second uplink signal transmission occasion;
a time interval between the first time point and/or the second time point and the corresponding uplink signal transmission occasion satisfies at least one of the following conditions that:

if the first indication information and/or the second indication information is/are control information and the control information corresponds to two PDCCH candidates, the time interval is determined according to one of the two PDCCH candidates;
if the first indication information and/or the second indication information is/are configuration grant information, the time interval is related to whether the terminal equipment monitors control information corresponding to the two PDCCH candidates;
if the first uplink signal and/or the second uplink signal is/are not in response to received downlink control information (DCI), the time interval is related to whether the terminal equipment monitors control information corresponding to the two PDCCH candidates; and
if the first uplink signal and/or the second uplink signal is/are a semi-persistent or periodic sounding reference signal(s) (SRS(s)), the time interval is related to whether the terminal equipment monitors control information corresponding to the two PDCCH candidates.

2. The apparatus according to claim 1, wherein that the time interval is determined according to one of the two PDCCH candidates refers to that,
the time interval is determined according to an ending symbol of one of the two PDCCH candidates and a first symbol of the corresponding uplink signal transmission occasion.

3. The apparatus according to claim 1 or 2, wherein one of the two PDCCH candidates refers to one of the following:

a PDCCH candidate with an earlier starting symbol in the two PDCCH candidates;
a PDCCH candidate with an earlier ending symbol in the two PDCCH candidates;
a PDCCH candidate with a later starting symbol in the two PDCCH candidates; and
a PDCCH candidate with a later ending symbol in the two PDCCH candidates.

4. The apparatus according to claim 2, wherein one of the two PDCCH candidates refers to one of the following:

a PDCCH candidate with an earlier starting symbol in the two PDCCH candidates;
a PDCCH candidate with an earlier ending symbol in the two PDCCH candidates;
a PDCCH candidate with a later starting symbol in the two PDCCH candidates; and
a PDCCH candidate with a later ending symbol in the two PDCCH candidates.

5. The apparatus according to claim 1, wherein that the time interval is related to whether the terminal equipment monitors control information corresponding to two PDCCH candidates refers to that,
when the terminal equipment monitors the control information corresponding to the two PDCCH candidates, the time interval is related to at least one of the following parameters:

a minimum value (k2) of a slot interval between control information and a corresponding uplink PUSCH in a cell-level PUSCH configuration parameter;
the number of symbols per slot ($N_{symb-slot}$); and
a time interval ($k_0$) that is predefined or configured by RRC signaling.

6. The apparatus according to claim 5, wherein, the time interval ($k_0$) that is predefined or configured by RRC signaling is applicable to a situation where the terminal equipment monitors the control information corresponding to the two PDCCH candidates.

7. The apparatus according to claim 1, wherein, the first time point is prior to the second time point.

8. The apparatus according to claim 1, wherein, the first uplink signal transmission occasion is a latest uplink signal transmission occasion prior to the second uplink signal transmission occasion that ensures that the first time point is prior to the second time point.

9. The apparatus according to claim 1, wherein, the first uplink signal and the second uplink signal are respectively at least one of the following: a PUSCH, a PUCCH, and an SRS.

10. A signal transmission apparatus, configured in a terminal equipment, wherein the apparatus comprises:

a receiving unit configured to receive control information, the control information corresponding to two PDCCH candidates, the two PDCCH candidates corresponding to two PDCCH monitoring occasions, and the control information indicating the terminal equipment to transmit a PUSCH, the PUSCH including PHRs; and
a determining unit configured to, according to third indication information received within a time interval from the PHRs being triggered to a first PDCCH monitoring occasion and the first PDCCH monitoring occasion is included in the time interval, determine whether a PHR for an active serving cell in the PHRs is according to actual transmission or a reference format;

the first PDCCH monitoring occasion referring to one of the two PDCCH monitoring occasions.

11. The apparatus according to claim 10, wherein, the first PDCCH monitoring occasion is a later PDCCH monitoring occasion in a time domain in the two PDCCH monitoring occasions.

12. The apparatus according to claim 10, wherein, the first PDCCH monitoring occasion is an earlier PDCCH monitoring occasion in a time domain in the two PDCCH monitoring occasions.

13. The apparatus according to claim 10, wherein, the two PDCCH monitoring occasions to which the two PDCCH candidates correspond are different.

14. The apparatus according to claim 10, wherein, the third indication information refers to at least one of the following:

configuration grant information;
periodic or semi-persistent SRS transmission information; and
downlink control information (DCI).

15. The apparatus according to claim 10, wherein, the control information schedules an initial transmission of a transport block.

16. A terminal equipment, comprising a memory and a processor, the memory storing a computer program, and the processor being configured to execute the computer program to carry out the following method:

receiving first indication information, the first indication information indicating the terminal equipment to transmit a first uplink signal, wherein the first uplink signal corresponds to a first uplink signal transmission occasion;
receiving second indication information, the second indication information indicating the terminal equipment to transmit a second uplink signal, wherein the second uplink signal corresponds to a second uplink signal transmission occasion; and
determining an uplink power control parameter of the second uplink signal according to a transmit power control command (TPC) command received between a first time point and a second time point;
wherein,
the first time point is prior to the first uplink signal transmission occasion;
the second time point is prior to the second uplink signal transmission occasion;
a time interval between the first time point and/or the second time point and the corresponding uplink signal transmission occasion satisfies at least one of the following conditions that:

if the first indication information and/or the second indication information is/are control information and the control information corresponds to two PDCCH candidates, the time interval is determined according to one of the two PDCCH candidates;

if the first indication information and/or the second indication information is/are configuration grant information, the time interval is related to whether the terminal equipment monitors control information corresponding to the two PDCCH candidates;

if the first uplink signal and/or the second uplink signal is/are in response to received downlink control information (DCI), the time interval is related to whether the terminal equipment monitors control information corresponding to the two PDCCH candidates; and

if the first uplink signal and/or the second uplink signal is/are a semi-persistent or periodic sounding reference signal(s) (SRS(s)), the time interval is related to whether the terminal equipment monitors control information corresponding to the two PDCCH candidates.

FIG. 1

101

the terminal equipment receives first indication information, the first indication information indicating the terminal equipment to transmit a first uplink signal, wherein the first uplink signal corresponds to a first uplink signal transmission occasion

102

the terminal equipment receives second indication information, the second indication information indicating the terminal equipment to transmit a second uplink signal, wherein the second uplink signal corresponds to a second uplink signal transmission occasion

103

the terminal equipment determines an uplink power control parameter of the second uplink signal according to a transmission power control (TPC) command received between a first time point and a second time point

FIG. 2

$K(1) - 1$ symbols

PUSCH#1

#1-1   #1-2

$K(2)$ symbols

PUSCH#2

#2-1   #2-2

Time period of TPC Command via accumulation for PUSCH#2

A

B

#1-1   PDCCH candidate#1-1

#1-2   PDCCH candidate#1-2

#2-1   PDCCH candidate#2-1

#2-2   PDCCH candidate#2-2

FIG. 3

K(1) - 1
symbols

PUSCH#1

K(2) symbols

PUSCH#2

#1-1    #1-2

#2-1    #2-2

Time period of TPC Command via accumulation for
PUSCH#2

A

B

| #1-1 | PDCCH candidate#1-1 |
| #1-2 | PDCCH candidate#1-2 |
| #2-1 | PDCCH candidate#2-1 |
| #2-2 | PDCCH candidate#2-2 |

FIG. 4

K(1) - 1 symbols

PUCCH#1

K(2) symbols

PUCCH#2

#1-1    #1-2

#2-1    #2-2

Time period of TPC Command via accumulation for
PUCCH#2

A

B

| #1-1 | PDCCH candidate #1-1 |
| #1-2 | PDCCH candidate #1-2 |
| #2-1 | PDCCH candidate #2-1 |
| #2-2 | PDCCH candidate #2-2 |

FIG. 5

K(1) - 1 symbols

PUCCH#1

K(2) symbols

PUCCH#2

#1-1  #1-2

#2-1  #2-2

Time period of TPC Command via accumulation for PUCCH#2

A                                                                    B

#1-1  PDCCH candidate#1-1

#1-2  PDCCH candidate#1-2

#2-1  PDCCH candidate#2-1

#2-2  PDCCH candidate#2-2

FIG. 6

K(1) - 1 symbols

SRS#1

K(2) symbols

SRS#2

#1-1  #1-2

#2-1  #2-2

Time period of TPC Command via accumulation for SRS#2

A                                                                    B

#1-1  PDCCH candidate #1-1

#1-2  PDCCH candidate #1-2

#2-1  PDCCH candidate #2-1

#2-2  PDCCH candidate #2-2

FIG. 7

K(1) - 1 symbols

SRS#1

#1-1

#1-2

K(2) symbols

SRS#2

#2-1

#2-2

Time period of TPC Command via accumulation for SRS#2

A

B

| | |
|---|---|
| #1-1 | PDCCH candidate#1-1 |
| #1-2 | PDCCH candidate#1-2 |
| #2-1 | PDCCH candidate#2-1 |
| #2-2 | PDCCH candidate#2-2 |

FIG. 8

K(1) - 1 symbols

PUSCH#1

K(2) symbols

PUSCH#2

Time period of TPC Command via accumulation for PUSCH#2

A

B

$K(1) = K_{PUSCH,min} + k_0$

$K(2) = K_{PUSCH,min} + k_0$

FIG. 9

K(1) - 1 symbols

PUCCH#1

K(2) symbols

PUCCH#2

Time period of TPC Command via accumulation for PUCCH#2

A

B

$K(1) = K_{PUSCH,min} + k_0$

$K(2) = K_{PUSCH,min} + k_0$

FIG. 10

K(1) - 1 symbols

SRS#1

K(2) symbols

SRS#2

Time period of TPC Command via accumulation for SRS#2

A

B

$K(1) = K_{PUSCH,min} + k_0$

$K(2) = K_{PUSCH,min} + k_0$

FIG. 11

1101

the terminal equipment receives control information, the control information corresponding to two PDCCH candidates, the two PDCCH candidates corresponding to two PDCCH monitoring occasions, and the control information indicating the terminal equipment to transmit a PUSCH, the PUSCH including PHRs

1102

the terminal equipment determines whether a PHR for an active serving cell in the PHRs is according to actual transmission or a reference format according to third indication information received within a time interval from the PHRs being triggered to a first PDCCH monitoring occasion and the first PDCCH monitoring occasion is included in the time interval, the first PDCCH monitoring occasion referring to one of the two PDCCH monitoring occasions

FIG. 12

PUSCH#1

#1    #2

Time period for a UE to determine whether a power headroom report for an activated serving cell is according to an actual transmission or a reference format

PHR triggered                                                C

#1   PDCCH monitoring occasion #1

#2   PDCCH monitoring occasion #2

FIG. 13

PUSCH#1

#1    #2

Time period for a UE to determine whether a power headroom report for an activated serving cell is according to an actual transmission or a reference format

PHR triggered                                                C

#1   PDCCH monitoring occasion #1

#2   PDCCH monitoring occasion #2

FIG. 14

1400

signal transmission apparatus

1401

first receiving unit

1402

second receiving unit

1403

determining unit

FIG. 15

1500

signal transmission apparatus

1501

receiving unit

1503

determining unit

FIG. 16

**1600**

1601

1602

FIG. 17

1700

**Terminal
equipment**

1701

1703

1704 — **Input unit**

**Communication
module
(transmitter/receiver)**

**Memory**

buffer

1702 — Application/function

data

program

**processor**

**display** — 1705

**Power supply** — 1706

## INTERNATIONAL SEARCH REPORT

| International application No. |
| --- |
| **PCT/CN2021/111033** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W, H04L

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, 3GPP, IEEE, IETF, NPL, GOOGLE, BAIDU: 多发送接收点, 物理下行控制信道, 候选, 上行, 物理上行共享信道, 发送机会, 传输功率控制, 下行控制信息, 监听, 开始, 结束, 符号, 早, 晚, 功率余量报告, 实际传输, 参考格式, 传输块, 初传, mTRP, PDCCH, candidate, uplink, PUSCH, transmission occasion, TPC, DCI, monitor, start, begin, end, last, symbol, earlier, latter, PHR, actual transmission, reference format, TB, initial

**C. DOCUMENTS CONSIDERED TO BE RELEVANT**

| Category* | Citation of document, with indication, where appropriate, of the relevant passages | Relevant to claim No. |
| --- | --- | --- |
| A | CN 103843419 A (HUAWEI TECHNOLOGIES CO., LTD.) 04 June 2014 (2014-06-04) entire document | 1-9, 16 |
| A | CN 110651506 A (SHARP KABUSHIKI KAISHA et al.) 03 January 2020 (2020-01-03) entire document | 1-9, 16 |
| A | US 2019223164 A1 (INTEL CORP.) 18 July 2019 (2019-07-18) entire document | 1-9, 16 |
| A | ASUSTeK. ""Discussion on enhancements for Multi-TRP PDCCH"" *3GPP TSG RAN WG1 #104b-e, R1-2103674*, 06 April 2021 (2021-04-06), entire document | 1-9, 16 |
| A | CN 107690157 A (BEIJING XINWEI TELECOM TECHNOLOGY INC.) 13 February 2018 (2018-02-13) entire document | 10-15 |
| A | US 2021045070 A1 (YI, Y. J. et al.) 11 February 2021 (2021-02-11) entire document | 10-15 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 April 2022** | **24 April 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/111033** |

**C.     DOCUMENTS CONSIDERED TO BE RELEVANT**

| Category* | Citation of document, with indication, where appropriate, of the relevant passages | Relevant to claim No. |
|---|---|---|
| A | VIVO. ""Summary of email discussion [103-e-NR-L1enh-URLLC-06]"" *3GPP TSG RAN WG1 #103-e, R1-2009462,* 03 November 2020 (2020-11-03), entire document | 10-15 |

Form PCT/ISA/210 (second sheet) (January 2015)

**INTERNATIONAL SEARCH REPORT**

International application No.

**PCT/CN2021/111033**

| Box No. III | Observations where unity of invention is lacking (Continuation of item 3 of first sheet) |

This International Searching Authority found multiple inventions in this international application, as follows:

[1] (1) Claims 1-9 and 16 set forth a signal transmission device, used for determining an uplink power control parameter corresponding to an uplink signal; and (2) claims 10-15 set forth a signal transmission device, used for determining whether a power headroom report sent by a terminal is based on actual transmission or a reference format. The above two inventions do not belong to a single general inventive concept, and do not share a same or corresponding special technical feature, and therefore, said inventions lack unity and do not comply with PCT Rules 13.1, 13.2 and 13.3.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

INTERNATIONAL SEARCH REPORT
Information on patent family members

International application No.

**PCT/CN2021/111033**

| Patent document cited in search report | | | Publication date (day/month/year) | Patent family member(s) | | | Publication date (day/month/year) |
|---|---|---|---|---|---|---|---|
| CN | 103843419 | A | 04 June 2014 | US | 2015201382 | A1 | 16 July 2015 |
| | | | | EP | 2894908 | A1 | 15 July 2015 |
| | | | | WO | 2014047904 | A1 | 03 April 2014 |
| CN | 110651506 | A | 03 January 2020 | CA | 3041070 | A1 | 11 May 2018 |
| | | | | BR | 112019007887 | A2 | 02 July 2019 |
| | | | | EP | 3536055 | A1 | 11 September 2019 |
| | | | | WO | 2018085204 | A1 | 11 May 2018 |
| US | 2019223164 | A1 | 18 July 2019 | None | | | |
| CN | 107690157 | A | 13 February 2018 | None | | | |
| US | 2021045070 | A1 | 11 February 2021 | None | | | |

Form PCT/ISA/210 (patent family annex) (January 2015)